# EUROPEAN PATENT APPLICATION

(11) **EP 4 400 547 A1**
(43) Date of publication of application: **17.07.2024**
(21) Application number: 22867259.8
(22) Date of filing: 30.08.2022
(51) Int. Cl.: C08L 77/00, C08J 5/04, C08K 7/02

(54) **POLYAMIDE RESIN COMPOSITION**

(30) Priority: 08.09.2021 JP 2021146186
(71) Applicant: UBE Corporation, Ube-shi, Yamaguchi 755-8633 (JP)
(72) Inventor: OISHI, Kosuke, Ube-shi, Yamaguchi 755-8633 (JP); MIKI, Yuya, Ube-shi, Yamaguchi 755-8633 (JP); OKAZAKI, Takehiro, Ube-shi, Yamaguchi 755-8633 (JP); KODAMA, Hitoshi, Ube-shi, Yamaguchi 755-8633 (JP); ARAKAWA, Seiichi, Ube-shi, Yamaguchi 755-8633 (JP)
(74) Representative: Hoffmann Eitle
(86) International application number: PCT/JP2022/032659
(87) International publication number: WO 2023/037937

(57) **Abstract**

A molded article obtained from the polyamide resin composition has improved mechanical properties including a tensile strength, a tensile modulus, a flexural strength, and a flexural modulus, and improved suppression of warpage. The polyamide resin composition of the present invention is a polyamide resin composition comprising an aliphatic polyamide resin (A) and a fibrous reinforcing filler (B), wherein the aliphatic polyamide resin (A) has a number average molecular weight of less than 22,000, and wherein the ratio of a median of the fiber length of the fibrous reinforcing filler (B) to an average of the fiber length of the fibrous reinforcing filler (B) is 0.50 to less than 0.90.

## Description

### Field of the Invention

The present invention relates to a polyamide resin composition comprising a fibrous reinforcing filler.

### Background Art

Polyamide resins have excellent mechanical properties, heat resistance, and chemical resistance, and therefore have been widely used as engineering plastics in, for example, automotive parts, mechanical parts, sliding parts, and electric and electronic parts.

With respect to be used in these applications, a polyamide resin composition having a glass fiber incorporated into a polyamide resin for improving the rigidity and sliding properties has been known (see, for example, patent document 1).

Generally, a polyamide resin composition is obtained by melt-kneading a polyamide resin, a fibrous reinforcing filler, such as a glass fiber, and other components. The fibrous reinforcing filler is likely to be broken in the resin composition being melt-kneaded. The effect of the fibrous reinforcing filler in improving the rigidity of a molded article obtained from the polyamide resin composition varies depending on breakage of the fibrous reinforcing filler in the polyamide resin composition.

Patent document 1 has a description that, with respect to the polyamide resin composition containing a glass fiber and a polyamide resin, wherein the average fiber length and average fiber diameter of the glass fiber are defined and the average molecular weight of the polyamide resin is defined, a molded article obtained from the polyamide resin composition is improved in the dimensional stability and sliding properties.

Patent document 2 has a description that, with respect to the polyamide resin composition having a glass fiber incorporated into a polyamide resin, wherein the average glass surface area (S) per unit number of fibers determined from the fiber length of the remaining glass fiber after melt-kneading is 1.1 times or more the critical glass surface area (Sc), excellent rigidity and heat stability are obtained.

### PRIOR ART REFERENCES

### Patent Documents

Patent document 1: JP 2017-171944A
Patent document 2: JP 2012-25844A

### Summary of the Invention

### Problems to be Solved by the Invention

However, when the glass fiber is broken, the resultant broken glass fibers have two or more different lengths, and therefore the distribution of lengths of the glass fibers is more important than the average of the lengths. Patent documents 1 and 2 have no description about the distribution of the fiber diameter of the glass fiber in the polyamide resin composition.

An object of the present invention is to provide a polyamide resin composition containing a fibrous reinforcing filler, in which the distribution of the fiber diameter of the fibrous reinforcing filler in the composition is in a specific range, wherein the polyamide resin composition is advantageous in that a molded article obtained from the polyamide resin composition has improved mechanical properties including a tensile strength, a modulus in tension (tensile modulus), a flexural strength, and a modulus in flexure (flexural modulus), and improved suppression of warpage.

### Means for Solving the Problems

The present invention is directed to, for example, the following [1] to [10].
[1] A polyamide resin composition comprising an aliphatic polyamide resin (A) and a fibrous reinforcing filler (B), wherein the aliphatic polyamide resin (A) has a number average molecular weight of less than 22,000, and wherein the ratio of a median of the fiber length of the fibrous reinforcing filler (B) to an average of the fiber length of the fibrous reinforcing filler (B) is 0.50 to less than 0.90.
[2] The polyamide resin composition according to item [1] above, wherein the aliphatic polyamide resin (A) has a relative viscosity of 1.90 to less than 3.30, as measured at 25°C in accordance with JIS K-6920-2.
[3] The polyamide resin composition according to item [1] or [2] above, wherein the ratio of a median of the fiber length of the fibrous reinforcing filler (B) to an average of the fiber length of the fibrous reinforcing filler (B) is 0.55 to 0.89.
[4] The polyamide resin composition according to any one of items [1] to [3] above, wherein the aliphatic polyamide resin (A) comprises an aliphatic homopolyamide resin (A-1).
[5] The polyamide resin composition according to any one of items [1] to [4] above, wherein the fibrous reinforcing filler is at least one member selected from the group consisting of a glass fiber, a carbon fiber, a cellulose fiber, and an aramid fiber.
[6] The polyamide resin composition according to any one of items [1] to [5] above, wherein the fibrous reinforcing filler (B) is contained in an amount of 5 to 40% by mass, in 100% by mass of the polyamide resin composition.
[7] A method for producing the polyamide resin composition according to any one of items [1] to [6] above, the method comprising charging an aliphatic polyamide resin (A) and an optional component from a raw material feed hopper and melt-kneading the resultant mixture, and then charging part of a fibrous reinforcing filler from a top feed and melt-kneading the resultant mixture, and then further charging the remaining fibrous reinforcing filler from a side feed and melt-kneading the resultant mixture.
[8] The method for producing the polyamide resin composition according to item [7] above, wherein the (amount of the fibrous reinforcing filler charged from the top feed): (amount of the fibrous reinforcing filler charged from the side feed) ratio (mass ratio) is 5:95 to 95:5, wherein the amount of the whole of the fibrous reinforcing filler incorporated into the polyamide resin composition is 100 parts by mass.
[9] A molded article which is obtained from the polyamide resin composition according to items [1] to [6] above.
[10] The molded article according to item [9] above, which is an automotive part, a sliding part, or an electric or electronic part.

### Effects of the Invention

The polyamide resin composition of the present invention is advantageous in that a molded article obtained from the polyamide resin composition has good mechanical properties including a tensile strength, a tensile modulus, a flexural strength, and a flexural modulus, and has suppressed warpage.

### BRIEF DESCRIPTION OF THE DRAWING

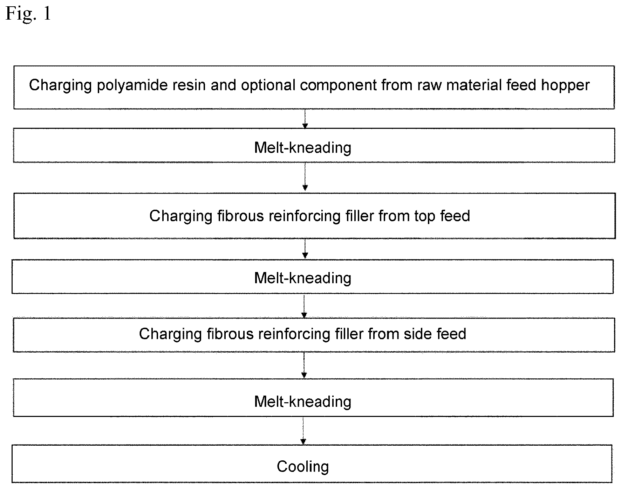

[Fig. 1] A flowchart showing an example of the method for producing the polyamide resin composition.

### MODE FOR CARRYING OUT THE INVENTION

The present invention is directed to a polyamide resin composition which comprises an aliphatic polyamide resin (A) and a fibrous reinforcing filler (B), wherein the aliphatic polyamide resin (A) has a number average molecular weight of less than 22,000, and wherein the ratio of a median of the fiber length of the fibrous reinforcing filler (B) to an average of the fiber length of the fibrous reinforcing filler (B) is 0.50 to less than 0.90.

### <Aliphatic polyamide resin (A)>

The polyamide resin composition comprises aliphatic polyamide resin (A).

Examples of aliphatic polyamide resins (A) include aliphatic homopolyamide resin (A-1) and aliphatic copolymer polyamide resin (A-2). These resins may be used individually or in combination. Of these, from the viewpoint of the moldability, aliphatic polyamide resin (A) preferably comprises aliphatic homopolyamide resin (A-1). The "aliphatic" includes "alicyclic".

### (A-1) Aliphatic homopolyamide resin

Aliphatic homopolyamide resin (A-1) is a polyamide resin consisting of one kind of aliphatic constituent units. Aliphatic homopolyamide resin (A-1) may consist of at least one of one kind of a lactam and an aminocarboxylic acid which is a hydrolysate of the lactam, and may consist of a combination of one kind of a diamine and one kind of a dicarboxylic acid. With respect to the combination of a diamine and a dicarboxylic acid, a combination of one kind of a diamine and one kind of a dicarboxylic acid is regarded as one kind of a monomer.

### Examples of lactams include ε-caprolactam, enantholactam, undecanlactam, α-pyrrolidone, α-piperidone, and laurolactam etc..

Of these, from the viewpoint of the polymerization productivity, preferred is one member selected from the group consisting of ε-caprolactam, undecanlactam, and laurolactam.

Examples of aminocarboxylic acids include 6-aminocaproic acid, 7-aminoheptanoic acid, 9-aminononanoic acid, 11-aminoundecanoic acid, and 12-aminododecanoic acid.

Of these, from the viewpoint of the polymerization productivity, preferred is one member selected from the group consisting of 6-aminocaproic acid, 11-aminoundecanoic acid, and 12-aminododecanoic acid.

Examples of diamines include aliphatic diamines, such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, and 2,2,4/2,4,4-trimethylhexamethylenediamine etc.; and alicyclic diamines, such as 1,3-/1,4-cyclohexyldiamine, bis(4-aminocyclohexyl)methane, bis(4-aminocyclohexyl)propane, bis(3-methyl-4-aminocyclohexyl)methane, (3-methyl-4-aminocyclohexyl)propane, 1,3-/1,4-bisaminomethylcyclohexane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, and norbornanedimethyleneamine etc..

Of these, from the viewpoint of the polymerization productivity, an aliphatic diamine is preferred, and hexamethylenediamine is more preferred.

Examples of dicarboxylic acids include aliphatic dicarboxylic acids, such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and eicosanedioic acid etc.; and alicyclic dicarboxylic acids, such as 1,3-/1,4-cyclohexanedicarboxylic acid, dicyclohexanemethane-4,4'-dicarboxylic acid, and norbornanedicarboxylic acid etc..

Of these, an aliphatic dicarboxylic acid is preferred, and one member selected from the group consisting of adipic acid, sebacic acid, and dodecanedioic acid is more preferred, and adipic acid or dodecanedioic acid is further preferred.

Specific examples of aliphatic homopolyamide resins (A-1) include polycaprolactam (polyamide 6), polyenantholactam (polyamide 7), polyundecanelactam (polyamide 11), polylaurolactam (polyamide 12), polyhexamethylene adipamide (polyamide 66), polytetramethylene dodecamide (polyamide 412), polypentamethylene azelamide (polyamide 59), polypentamethylene sebacamide (polyamide 510), polypentamethylene dodecamide (polyamide 512), polyhexamethylene azelamide (polyamide 69), polyhexamethylene sebacamide (polyamide 610), polyhexamethylene dodecamide (polyamide 612), polynonamethylene adipamide (polyamide 96), polynonamethylene azelamide (polyamide 99), polynonamethylene sebacamide (polyamide 910), polynonamethylene dodecamide (polyamide 912), polydecamethylene adipamide (polyamide 106), polydecamethylene azelamide (polyamide 109), polydecamethylene decamide (polyamide 1010), polydecamethylene dodecamide (polyamide 1012), polydodecamethylene adipamide (polyamide 126), polydodecamethylene azelamide (polyamide 129), polydodecamethylene sebacamide (polyamide 1210), polydodecamethylene dodecamide (polyamide 1212), and polyamide 122 etc.. Aliphatic homopolyamide resins (A-1) may be used individually or in combination.

Of these, from the viewpoint of the polymerization productivity, aliphatic homopolyamide resin (A-1) is preferably at least one member selected from the group consisting of polyamide 6, polyamide 11, polyamide 12, polyamide 66, polyamide 610, and polyamide 612, more preferably at least one member selected from polyamide 6, polyamide 11, polyamide 12, polyamide 610, and polyamide 612, further preferably polyamide 6.

Examples of apparatuses for producing aliphatic homopolyamide resin (A-1) include known apparatuses for producing a polyamide, such as a batch reactor, a single-stage or multi-stage continuous reaction apparatus, a tubular continuous reaction apparatus, and kneading reaction extruders, e.g., a single-screw kneading extruder and a twin-screw kneading extruder. Using a known method, such as melt polymerization, solution polymerization, or solid-phase polymerization etc., as a polymerization method, polymerization can be made by repeating an operation under atmospheric pressure and an operation of reducing or increasing the pressure. These polymerization methods can be used individually or appropriately in combination.

The relative viscosity of aliphatic homopolyamide resin (A-1) is determined in accordance with JIS K 6920-2 by dissolving 1 g of the aliphatic homopolyamide in 100 ml of 96% concentrated sulfuric acid and measuring a relative viscosity with respect to the resultant solution at 25°C. The relative viscosity of the aliphatic homopolyamide is preferably 1.90 to less than 3.30, more preferably 2.20 to less than 3.00. Further, from the viewpoint of improving the effects of the present invention, the relative viscosity of the aliphatic homopolyamide is further preferably 2.40 to less than 2.80. When the relative viscosity of aliphatic homopolyamide resin (A-1) is in the above range, good molding processability and good mechanical physical properties can be obtained.

The terminal amino group concentration of aliphatic homopolyamide resin (A-1) can be determined by dissolving the resin in a mixed solvent of phenol and methanol and subjecting the resultant solution to neutralization titration. The terminal amino group concentration of aliphatic homopolyamide resin (A-1) is preferably 30 µmol/g or more, more preferably 30 to 60 µmol/g.

### (A-2) Aliphatic copolymer polyamide resin

Aliphatic copolymer polyamide resin (A-2) is a polyamide resin consisting of two kinds or more of aliphatic constituent units. Aliphatic copolymer polyamide resin (A-2) is a copolymer of monomers selected from the group consisting of a combination of a diamine and a dicarboxylic acid, a lactam, and an aminocarboxylic acid. With respect to the combination of a diamine and a dicarboxylic acid, a combination of one kind of a diamine and one kind of a dicarboxylic acid is regarded as one kind of a monomer.

As examples of diamines, there can be mentioned the same as mentioned above as examples of the raw materials for aliphatic homopolyamide resin (A-1). The diamines may be used individually or appropriately in combination. Of these, from the viewpoint of the polymerization productivity, preferred is at least one member selected from the group consisting of aliphatic diamines, more preferred is at least one member selected from the group consisting of linear aliphatic diamines, and further preferred is hexamethylenediamine.

As examples of dicarboxylic acids, there can be mentioned the same as mentioned above as examples of the raw materials for aliphatic homopolyamide resin (A-1). The dicarboxylic acids may be used individually or appropriately in combination. Of these, preferred is an aliphatic dicarboxylic acid, more preferred is at least one member selected from the group consisting of adipic acid, sebacic acid, and dodecanedioic acid, and further preferred is at least one member selected from adipic acid and dodecanedioic acid.

As examples of lactams, there can be mentioned the same as mentioned above as examples of the raw materials for aliphatic homopolyamide resin (A-1). The lactams may be used individually or appropriately in combination. Of these, from the viewpoint of the polymerization production, preferred is at least one member selected from the group consisting of ε-caprolactam, undecanelactam, and laurolactam.

As examples of aminocarboxylic acids, there can be mentioned the same as mentioned above as examples of the raw materials for aliphatic homopolyamide resin (A-1). The aminocarboxylic acids may be used individually or appropriately in combination. Of these, from the viewpoint of the polymerization production, preferred is at least one member selected from the group consisting of 6-aminocaproic acid, 11-aminoundecanoic acid, and 12-aminododecanoic acid.

Specific examples of aliphatic copolymer polyamide resins (A-2) include aliphatic copolymer polyamides, such as a caprolactam/hexamethylenediaminoadipic acid copolymer (polyamide 6/66), a caprolactam/hexamethylenediaminoazelaic acid copolymer (polyamide 6/69), a caprolactam/hexamethylenediaminosebacic acid copolymer (polyamide 6/610), a caprolactam/hexamethylenediaminoundecanoic acid copolymer (polyamide 6/611), a caprolactam/hexamethylenediaminododecanoic acid copolymer (polyamide 6/612), a caprolactam/aminoundecanoic acid copolymer (polyamide 6/11), a caprolactam/laurolactam copolymer (polyamide 6/12), a caprolactam/hexamethylenediaminoadipic acid/laurolactam copolymer (polyamide 6/66/12), a caprolactam/hexamethylenediaminoadipic acid/hexamethylenediaminosebacic acid copolymer (polyamide 6/66/610), and a caprolactam/hexamethylenediaminoadipic acid/hexamethylenediaminododecanedicarboxylic acid copolymer (polyamide 6/66/612) etc.. Aliphatic copolymer polyamide resins (A-2) may be used individually or in combination.

Of these, from the viewpoint of suppressing the water absorption of a molded article obtained from the resultant resin composition and maintaining the mechanical strength of the molded article, aliphatic copolymer polyamide resin (A-2) is preferably at least one member selected from the group consisting of polyamide 6/66, polyamide 6/12, and polyamide 6/66/12, more preferably at least one member selected from the group consisting of polyamide 6/66 and polyamide 6/66/12, especially preferably polyamide 6/66.

As examples of apparatuses for producing aliphatic copolymer polyamide resin (A-2) and polymerization methods for the aliphatic copolymer polyamide resin, there can be mentioned the same as mentioned above as examples in connection with aliphatic homopolyamide resin (A-1).

With respect to the relative viscosity of aliphatic copolymer polyamide resin (A-2), from the viewpoint of the molding processability and mechanical physical properties, the relative viscosity, which is determined in accordance with JIS K 6920-2 by dissolving 1 g of the aliphatic copolymer polyamide in 100 ml of 96% concentrated sulfuric acid and measuring a relative viscosity with respect to the resultant solution at 25°C, is preferably 1.90 to less than 3.30, more preferably 2.20 to less than 3.00. Further, from the viewpoint of improving the effects of the present invention, the relative viscosity of aliphatic copolymer polyamide resin (A-2) is further preferably 2.40 to less than 2.80.

The terminal amino group concentration of aliphatic copolymer polyamide resin (A-2) can be determined by dissolving the resin in a mixed solvent of phenol and methanol and subjecting the resultant solution to neutralization titration. The terminal amino group concentration of aliphatic copolymer polyamide resin (A-2) is preferably 30 µmol/g or more, more preferably 30 to 55 µmol/g. It is preferred that the terminal amino group concentration of aliphatic copolymer polyamide resin (A-2) is in the above range in view of the adhesion to the fibrous reinforcing filler or adhesion to another resin.

Aliphatic polyamide resin (A) has a number average molecular weight of less than 22,000, preferably 2,000 to 20,000, more preferably 5,000 to 18,000. When the number average molecular weight of aliphatic polyamide resin (A) is larger than the above range, a molded article obtained from the polyamide resin composition has poor mechanical physical properties.

The number average molecular weight of aliphatic polyamide resin (A) can be measured by the gel permeation chromatography described in the Examples.

From the viewpoint of the molding processability, aliphatic polyamide resin (A) preferably has a relative viscosity of 1.90 to less than 3.30, more preferably 2.20 to less than 3.00, wherein the relative viscosity is determined in accordance with JIS K-6920-2 by dissolving 1 g of the polyamide resin in 100 ml of 96% concentrated sulfuric acid and measuring a relative viscosity with respect to the resultant solution at 25°C. Further, from the viewpoint of improving the effects of the present invention, the relative viscosity of aliphatic polyamide resin (A) is further preferably 2.40 to less than 2.80.

When aliphatic polyamide resin (A) comprises two or more polyamide resins having different relative viscosities (for example, at least one aliphatic homopolyamide resin (A-1) and at least one aliphatic copolymer polyamide resin (A-2)), it is preferred that the relative viscosity of aliphatic polyamide resin (A) is measured in accordance with the above-mentioned procedure, but, when the relative viscosities of the respective polyamide resins and the ratios of the polyamide resins mixed are known, an average calculated from a total of values obtained by multiplying the relative viscosities of the respective polyamide resins by the respective ratios can be used as a relative viscosity of aliphatic polyamide resin (A).

The terminal amino group concentration of aliphatic polyamide resin (A), in terms of a terminal amino group concentration determined by neutralization titration with respect to the resin dissolved in a mixed solvent of phenol and methanol, is preferably in the range of 30 µmol/g or more, more preferably in the range of from 30 to 60 µmol/g. When the terminal amino group concentration of aliphatic polyamide resin (A) is in the above range, satisfactory molding processability and mechanical physical properties can be obtained.

When aliphatic polyamide resin (A) comprises two or more polyamide resins having different terminal amino group concentrations (for example, at least one aliphatic homopolyamide resin (A-2) and at least one aliphatic copolymer polyamide resin (A-1)), it is preferred that the terminal amino group concentration of aliphatic polyamide resin (A) is measured by the above-mentioned neutralization titration, but, when the terminal amino group concentrations of the respective polyamide resins and the ratios of the polyamide resins mixed are known, an average calculated from a total of values obtained by multiplying the terminal amino group concentrations by the respective ratios can be used as a terminal amino group concentration of aliphatic polyamide resin (A).

Aliphatic polyamide resin (A) is preferably at least one member selected from the group consisting of polyamide 6, polyamide 11, polyamide 12, polyamide 66, polyamide 610, polyamide 612, polyamide 6/66, polyamide 6/12, and polyamide 6/66/12, more preferably at least one member selected from the group consisting of polyamide 6, polyamide 66, and polyamide 610, further preferably polyamide 6.

Aliphatic polyamide resin (A) is preferably contained in an amount of 50 to 80% by mass, more preferably 50 to 75% by mass, further preferably 55 to 70% by mass, in 100% by mass of the polyamide resin composition. When the amount of the contained aliphatic polyamide resin (A) is in the above range, good molding processability is achieved.

### <Fibrous reinforcing filler (B)>

The polyamide resin composition comprises fibrous reinforcing filler (B).

In the present specification, the term "fibrous reinforcing filler (B)" that is described as a component of the polyamide resin composition means the fibrous reinforcing filler which is obtained after melt-kneading the fibrous reinforcing filler as a raw material, together with aliphatic polyamide resin (A) and another component. Accordingly, fibrous reinforcing filler (B) includes the fibrous reinforcing filler, which the fibrous reinforcing filler as a raw material is broken due to melt-kneading as mentioned below. Therefore, the amount of the fibrous reinforcing filler (B) contained in the polyamide resin composition includes the amount of the fibrous reinforcing filler which is broken and is not defined by the term "fibrous" in the present specification.

### (1) Fibrous reinforcing filler as a raw material prior to melt-kneading

The term "fibrous" means a form of fiber such that the fiber length is 0.3 mm or more and the aspect ratio (fiber length! diameter ratio) is 10 or more.

With respect to the fibrous reinforcing filler, any of an inorganic filler and an organic filler can be used, and examples of such fillers include a glass fiber, a carbon fiber, a cellulose fiber, and an aramid fiber etc.. Of these, from the viewpoint of improving the mechanical properties of the molded article obtained from the composition without lowering the flexibility of the molded article, a glass fiber is preferred. The fibrous reinforcing fillers may be used individually or in combination.

The fibrous reinforcing filler may have been subjected to surface treatment with a surface treatment agent. Further, for improving the operation properties, the fibrous reinforcing filler may have been bundled or granulated by a surface treatment agent. Examples of surface treatment agents include coupling agents, such as a silane coupling agent, a titanium coupling agent, an aluminum coupling agent, and a zirconia coupling agent etc.; water-glass, methyl cellulose, carboxymethyl cellulose, hydroxyethyl cellulose, hydroxypropyl cellulose, starch, polyvinyl alcohol, an acrylic resin, an epoxy resin, a phenolic resin, polyvinyl acetate, a polyurethane resin, an epoxy compound, an isocyanate compound, colloidal silica, colloidal alumina, a fatty acid, and a surfactant etc.. The surface treatment agents may be used individually or in combination.

The surface treatment agent may be used in such a way that the fibrous reinforcing filler has preliminarily been subjected to applying the surface treatment agent to the fibrous reinforcing filler and drying the applied agent for surface treatment or bundle treatment or in such a way that the surface treatment agent is added together with the fibrous reinforcing filler when preparing the resin composition.

With respect to the fibrous reinforcing filler as a raw material, a fibrous reinforcing filler having an average fiber diameter of 3 to 23 µm can be used. In view of the dimensional stability and mechanical properties of a molded article obtained from the composition, a fibrous reinforcing filler having an average fiber diameter of 6 to 23 µm is preferred, and, for example, a fibrous reinforcing filler having an average fiber diameter of 10 to 23 µm can be used.

With respect to the fiber length (cut length) of the fibrous reinforcing filler as a raw material, there is no particular limitation, and a chopped strand cut into 1 to 50 mm can be used, and, from the viewpoint of the productivity, the fiber length is more preferably 3 to 10 mm.

The above-mentioned values of the average fiber diameter and fiber length (cut length) of the fibrous reinforcing filler as a raw material are the values of the fibrous reinforcing filler prior to melt-kneading together with the polyamide resin. In the present specification, the fiber length of fibrous reinforcing filler (B) in the polyamide resin composition means a value for fibrous reinforcing filler (B) obtained after melt-kneading the fibrous reinforcing filler and aliphatic polyamide resin (A) and another component. The fiber length of the fibrous reinforcing filler in the polyamide resin composition is different from the fiber length of the above-mentioned fibrous reinforcing filler as a raw material as mentioned below because the fibrous reinforcing filler is broken due to melt-kneading.

The thickness, long diameter, short diameter, and average fiber diameter of the fibrous reinforcing filler and the glass fiber length (cut length) can be observed using an optical microscope. The average fiber diameter and the glass fiber length (cut length) of the fibrous reinforcing filler as a raw material may be the corresponding catalogued values.

### (2) Fibrous reinforcing filler (B) in the polyamide resin composition

When the polyamide resin composition is produced by the below-described method, the fibrous reinforcing filler charged from the top feed is easily broken during melt-kneading, whereas the fibrous reinforcing filler charged from the side feed is unlikely to be broken. Therefore, distribution of the average fiber length of the fibrous reinforcing filler in the polyamide resin composition varies depending on the amount of the fibrous reinforcing filler charged from the top feed and the amount of the fibrous reinforcing filler charged from the side feed.

With respect to fibrous reinforcing filler (B) in the polyamide resin composition, the ratio of a median of the fiber length of the fibrous reinforcing filler (B) to an average of the fiber length of fibrous reinforcing filler (B), that is, the (median of the fiber length of fibrous reinforcing filler (B))/(average of the fiber length of fibrous reinforcing filler (B)) ratio is 0.50 to less than 0.90, preferably 0.55 to 0.89, more preferably 0.60 to 0.89, especially preferably 0.65 to 0.89. When the (median of the fiber length of the fibrous reinforcing filler)/(average of the fiber length of the fibrous reinforcing filler) ratio is in the above range, good mechanical physical properties can be obtained.

The average of the fiber length of fibrous reinforcing filler (B) in the polyamide resin composition is preferably 150 to 750 µm, and the median of the fiber length of fibrous reinforcing filler (B) in the polyamide resin composition is preferably 100 to 600 µm. It is preferred that the average and median are in the above-mentioned respective ranges in view of obtaining the effects of the present invention.

An average and a median of the fiber length were determined as follows.

About 10 pellets of the polyamide resin composition were placed in a glass bottle, and 40 cc of 95% concentrated sulfuric acid was added and the resultant mixture was allowed to stand overnight so that the pellets were dissolved. The sulfuric acid and dissolved polyamide were removed from the resultant solution so that the glass fiber and a small amount of the sulfuric acid remained in the glass bottle. The remaining glass fiber and sulfuric acid were placed on slide glass and covered with cover glass, and a photomicrograph of the glass fiber was taken by means of an optical microscope. With respect to the glass fiber shown in the photomicrograph, except for the glass fiber in the residue, which cannot be clearly seen, and the glass fiber, the whole of which cannot be seen, a fiber length of about 100 glass fibers was measured, and an average and a median of the fiber length were determined.

Fibrous reinforcing filler (B) is preferably contained in an amount of 5 to 40% by mass, more preferably 10 to 40% by mass, further preferably 20 to 40% by mass, in 100% by mass of the polyamide resin composition. When the amount of the fibrous reinforcing filler contained is in the above range, good mechanical physical properties are obtained.

### <Heat-resisting agent>

The polyamide resin composition may optionally contain a heat-resisting agent.

With respect to the heat-resisting agent, one which is capable of improving the heat resistance of a molded article can be used, and an organic or inorganic heat-resisting agent can be used according to the purpose, and these may be used individually or in combination.

### (1) Organic heat-resisting agent

Examples of organic heat-resisting agents include a phenol-based compound, a phosphorus-based compound, a sulfur-based compound, and a nitrogen-based compound etc.. These compounds may be used individually or in combination.

### (Phenol-based compound)

Preferred examples of phenol-based compounds include a hindered phenolic compound. In the present specification, the term "hindered phenol" means a phenolic compound having a substituent at the ortho-position (hereinafter, frequently referred to as "o-position") with respect to the hydroxyl group of phenol. With respect to the substituent positioned at the o-position, there is no particular limitation, but examples of substituents include an alkyl group, an alkoxy group, an amino group, and a halogen etc.. Of these, preferred are alkyl groups, such as a methyl group, an ethyl group, a n-propyl group, an i-propyl group, a n-butyl group, a sec-butyl group, an i-butyl group, and a t-butyl group etc., more preferred are an i-propyl group, a sec-butyl group, an i-butyl group, and a t-butyl group, which are bulky, and most preferred is a t-butyl group. Further, the hindered phenol preferably has a substituent at both the two o-positions with respect to the hydroxyl group of phenol.

Specific examples of hindered phenols having a t-butyl group at the o-position include N,N'-hexamethylenebis(3,5-di-t-butyl-4-hydroxy-hydrocinnamamide), pentaerythritol-tetrakis[3-(3,5-di-t-butyl-4-hydroxyphenyl)-propionate, ethylenebis(oxyethylene)bis[3-(5-tert-butyl-4-hydroxy-m-tolyl)propionate], and 3,9-bis[2-[3-(3-tert-butyl-4-hydroxy-5-methylphenyl)propionyloxy]-1, 1-dimethylethyl]-2,4,8,10-tetraoxaspiro[5.5]undecane. These compounds may be used individually or in combination. Examples of commercially available products of the above heat-resisting agents include "Irganox 245", "Irganox 1010" (BASF AG), and "Sumilizer GA-80" (Sumitomo Chemical Co., Ltd.). These may be used individually or in combination.

### (Phosphorus-based compound)

With respect to the phosphorus-based compound, preferred are a phosphite compound of hindered phenol and a hypophosphite compound of hindered phenol, more preferred are a phosphite compound of hindered phenol having a t-butyl group at the o-position and a hypophosphite compound of hindered phenol having a t-butyl group at the o-position, and further preferred is a phosphite compound of hindered phenol having a t-butyl group at the o-position. Specific examples of phosphite compounds of hindered phenol having a t-butyl group at the o-position include tris(2,4-di-t-butylphenyl) phosphite and bis(2,6-di-t-butyl-4-methylphenyl)pentaerythritol diphosphite. Specific examples of hypophosphite compounds of hindered phenol having a t-butyl group at the o-position include a biphenyl comprised mainly of p,p,p',p'-tetrakis(2,4-di-tert-butylphenoxy)-4,4-biphenyl diphosphine, and a reaction product of phosphorus trichloride and 2,4-di-tert-butylphenol. Examples of commercially available products of the above heat-resisting agents include "Irgafos 168" (BASF AG), and "hostanox P-EPQ" (Clariant Japan K.K.). These may be used individually or in combination.

### (Sulfur-based compound)

Examples of sulfur compounds include distearyl-3,3-thiodipropionate, pentaerythrityl tetrakis(3-laurylthiopropionate), and didodecyl (3,3'-thiodipropionate). These compounds may be used individually or in combination.

### (Nitrogen-based compound)

Examples of nitrogen-based compounds include melamine, melamine cyanurate, benguanamine, dimethylolurea, and cyanuric acid. These compounds may be used individually or in combination.

With respect to the organic heat-resisting agent, from the viewpoint of the discoloration of the materials, a phenolic compound and a phosphorus compound are preferred, and a hindered phenolic compound is more preferred.

### (2) Inorganic heat-resisting agent

With respect to the kind of inorganic heat-resisting agent, there are a copper compound and a potassium halide, and examples of copper compounds include cuprous iodide, cuprous bromide, cupric bromide, copper acetate etc.. From the viewpoint of the heat resistance and suppression of corrosion of a metal, cuprous iodide is preferred. Examples of potassium halides include potassium iodide, potassium bromide, and potassium chloride etc.. From the viewpoint of the heat resistance and long-term stability of the inorganic heat-resisting agent, potassium iodide and/ or potassium bromide is preferred. These compounds may be used individually or in combination. A combination of cuprous iodide and potassium iodide and/or potassium bromide is also preferred.

Further, the use of an inorganic heat-resisting agent and a nitrogen-containing compound, such as melamine, melamine cyanurate, benguanamine, dimethylolurea, or cyanuric acid, in combination is more effective.

The heat-resisting agent is preferably contained in an amount of 0.01 to 5% by mass, more preferably 0.05 to 3% by mass, further preferably 0.1 to 1% by mass in 100% by mass of the polyamide resin composition. When the amount of the heat-resisting agent incorporated is in the above range, the resin can be prevented from suffering deterioration by heat.

### <Release agent>

The polyamide resin composition may optionally contain a release agent.

With respect to the release agent, there can be used component which is used when pouring into a mold and molding of the polyamide resin composition, and which permits the composition to be easily removed from the mold.

Examples of release agents include compounds, such as a terminal modification product of polyalkylene glycol, a phosphate or phosphite, a higher fatty acid monoester, a higher fatty acid or a metal salt thereof, a carboxamide, an ethylenebisamide compound, low molecular-weight polyethylene, magnesium silicate, and a substituted benzylidenesorbitol. These compounds may be used individually or in combination.

Examples of terminal modification products of polyalkylene glycol include a terminal modification product of polyethylene glycol and a terminal modification product of polypropylene glycol.

More specific examples of phosphates and phosphites include aliphatic phosphates and aliphatic phosphites, such as di(2-ethylhexyl) phosphate, tridecyl phosphite, tris(tridecyl) phosphite, and tristearyl phosphite; and aromatic phosphites, such as triphenyl phosphite and diphenylmonodecyl phosphite.

Examples of higher fatty acid monoesters include myristyl myristate, stearyl stearate, behenyl behenate, oleyl oleate, and hexyldecyl myristate.

Examples of higher fatty acids include myristic acid, palmitic acid, behenic acid, oleic acid, and arachidic acid.

Examples of metal salts of a higher fatty acid include zinc stearate, lithium stearate, calcium stearate, and aluminum palmitate.

Examples of carboxamides include aliphatic monocarboxamides, such as lauramide, palmitamide, oleamide, stearamide, erucamide, behenamide, ricinoleic acid amide, and 12-hydroxystearamide; N-substituted aliphatic monocarboxamides, such as N-lauryllauramide, N-palmitylpalmitamide, N-oleylpalmitamide, N-oleyloleamide, N-oleylstearamide, N-stearylstearamide, N-stearyloleamide, N-stearylerucamide, N-stearyl-12-hydroxystearamide, N-oleyl-12-hydroxystearamide, methylolstearamide, methylolbehenamide, and 12-hydroxystearic acid monoethanol amide; aliphatic carboxylic acid bisamides, such as methylenebisstearamide, methylenebislauramide, methylenebis-12-hydroxystearamide, ethylenebiscapramide, ethylenebislauramide, ethylenebisoleamide, ethylenebisstearamide, ethylenebiserucamide, ethylenebisbehenamide, ethylenebisisostearamide, ethylenebis-12-hydroxystearamide, butylenebisstearamide, hexamethylenebisoleamide, hexamethylenebisstearamide, hexamethylenebisbehenamide, hexamethylenebis-12-hydroxystearamide, N,N'-dioleylsebacamide, N,N'-dioleyladipamide, N,N'-distearyladipamide, and N,N'-distearylsebacamide; alicyclic carboxamides, such as N,N'-dicyclohexanecarbonyl-1,4-diaminocyclohexane, 1,4-cyclohexanedicarbamide, 1,4-cyclohexanedicarboxylic acid diaminocyclohexane, 1,2,3,4-butanetetracarboxylic acid tetracyclohexylamide, N,N'-bis(3-hydroxypropyl)-1,4-cubanedicarbamide, N,N'-(1,4-cyclohexanediyl)bis(acetamide), and tris(methylcyclohexyl)propanetricarboxamide; and aromatic carboxamides, such as 1,4-cyclohexanedicarboxylic acid dianilide, 1,4-cyclohexanedicarboxylic acid dibenzylamide, trimesic acid tris(t-butylamide), trimesic acid tricyclohexylamide, trimesic acid tri(2-methylcyclohexylamide), trimesic acid tri(4-cyclohexylamide), 2,6-naphthalenedicarboxylic acid dicyclohexylamide, N,N'-dibenzylcyclohexane-1,4-dicarbamide, N,N'-distearylisophthalamide, N,N'-distearylterephthalamide, m-xylylenebisstearamide, and m-xylylenebis-12-hydroxystearamide.

Examples of ethylenebisamide compounds include ethylenebisstearamide and ethylenebispalmitamide.

Examples of low molecular-weight polyethylene include polyethylene having a molecular weight in the range of from 500 to 5,000 and polyethylene having a molecular weight in the range of from 1,000 to 3,000.

Examples of magnesium silicate include those having an average particle diameter of 1 to 10 µm.

Examples of substituted benzylidenesorbitols include a substituted benzylidenesorbitol synthesized by dehydration condensation of sorbitol and a substituted benzaldehyde in the presence of an acid catalyst.

These compounds may be used individually or in combination.

The release agent is preferably contained in an amount of 0.01 to 2% by mass, more preferably 0.02 to 1.5% by mass, further preferably 0.05 to 1.0% by mass in 100% by mass of the polyamide resin composition. When the amount of the release agent incorporated is in the above range, good release from a mold in injection molding can be achieved.

### <Additive>

The polyamide resin composition may appropriately contain, according to the purpose, as an optional component, a function imparting agent, such as a dye, a pigment, a particulate reinforcement, a plasticizer, an antioxidant, a foaming agent, a weathering agent, a nucleating agent, a crystallization promoter, a lubricant, an antistatic agent, a flame retardant, an auxiliary for flame retardant, a colorant etc..

The optional additive may be preferably contained in an amount of 0.01 to 1% by mass, more preferably 0.05 to 0.5% by mass in 100% by mass of the polyamide resin composition.

### <Optional resin>

The polyamide resin composition may contain a thermoplastic resin other than aliphatic polyamide resin (A). With respect to the thermoplastic resin other than aliphatic polyamide resin (A), there is no particular limitation, but preferred examples of such thermoplastic resins include an aromatic homopolyamide resin and an aromatic copolymer polyamide resin. Among these aromatic polyamide resins, those which are fibrous are included in the fibrous reinforcing filler as an aramid fiber.

Specific examples of aromatic homopolyamide resins include polynonanemethylene terephthalamide (polyamide 9T), polyhexamethylene terephthalamide (polyamide 6T), polyhexamethylene isophthalamide (polyamide 6I), and polyxylylene adipamide (polyamide MXD6)etc..

Specific examples of aromatic copolymer polyamide resins include (polyamide 66/6T), a polyhexamethylene terephthalamide/polycaproamide copolymer (polyamide 6T/6), a polyhexamethylene adipamide/polyhexamethylene isophthalamide copolymer (polyamide 66/6I), a polyhexamethylene isophthalamide/polycaproamide copolymer (polyamide 6I/6), a polydodecamide/polyhexamethylene terephthalamide copolymer (polyamide 12/6T), a polyhexamethylene adipamide/polyhexamethylene terephthalamide/polyhexamethylene isophthalamide copolymer (polyamide 66/6T/6I), a polyhexamethylene adipamide/polycaproamide/polyhexamethylene isophthalamide copolymer (polyamide 66/6/6I), a polyhexamethylene terephthalamide/polyhexamethylene isophthalamide copolymer (polyamide 6T/6I), and a polyhexamethylene terephthalamide/poly(2-methylpentamethylene terephthalamide) copolymer (polyamide 6T/M5T) etc..

The thermoplastic resins other than aliphatic polyamide resin (A) may be used individually or in combination.

From the viewpoint of the mechanical physical properties and molding processability, the thermoplastic resin other than aliphatic polyamide resin (A) is preferably contained in an amount of 2% by mass or less, more preferably less than 0.1% by mass in 100% by mass of the polyamide resin composition, and it is further preferred that the thermoplastic resin other than aliphatic polyamide resin (A) is not contained.

### [Method for producing the polyamide resin composition]

With respect to the method for producing the polyamide resin composition, for example, the method described below can be applied.

When mixing aliphatic polyamide resin (A), the fibrous reinforcing filler, and another component, a conventionally known melt-kneading machine, such as a single-screw or twin-screw extruder, a Banbury mixer, a kneader, or a mixing roll etc., is generally used. After melt-kneading, the polyamide resin composition is generally obtained, for example, in the form of pellets.

The melt-kneading temperature is preferably 200 to 300°C, preferably 210 to 300°C, more preferably 220 to 300°C, further preferably 240 to 290°C. When the melt-kneading temperature is in the above range, excessive pulverization of the fibrous reinforcing filler is suppressed, so that there can be provided a resin composition from which a molded article having excellent mechanical strength while maintaining flexibility can be obtained. The melt-kneading temperature means a value determined by measuring, using a thermocouple thermometer, a temperature of the molten resin immediately after being extruded from a melt-kneading machine. With respect to the thermocouple thermometer used for the measurement, a conventionally known thermocouple thermometer can be used.

With respect to the method for producing the polyamide resin composition, preferred is a method which comprises charging aliphatic polyamide resin (A) and an optional component from a raw material feed hopper and melt-kneading the resultant mixture, and then charging part of a fibrous reinforcing filler from a top feed and melt-kneading the resultant mixture, and then further charging the remaining fibrous reinforcing filler from a side feed and melt-kneading the resultant mixture.

The method is described in detail with reference to Fig. 1.

A preferred method for producing the polyamide resin composition comprises:
(step 1) charging aliphatic polyamide resin (A) and an optional component from a raw material feed hopper,
(step 2) heating the raw materials charged in step 1 to a melt-kneading temperature and melt-kneading the raw materials,
(step 3) charging part of a fibrous reinforcing filler from a top feed to obtain a mixture of the melt-kneaded mixture in a liquid state and the part of fibrous reinforcing filler,
(step 4) further melt-kneading the mixture in step 3,
(step 5) charging the remaining fibrous reinforcing filler from a side feed into the melt-kneaded mixture obtained in step 4 to obtain a mixture of the melt-kneaded mixture in a liquid state and the remaining fibrous reinforcing filler,
(step 6) further melt-kneading the mixture in step 5, and
(step 7) cooing the melt-kneaded mixture obtained in step 6.

In the above-described method, with respect to the fibrous reinforcing filler charged from the top feed in step 3, step 3 through step 7 have a long melt-kneading time, and therefore the fibrous reinforcing filler charged from the top feed is more likely to be broken.

On the other hand, with respect to the remaining fibrous reinforcing filler charged in step 5, step 5 through step 7 have a short melt-kneading time, and therefore the fibrous reinforcing filler charged from the side feed is unlikely to be broken.

In steps 2, 4, and 6, the melt-kneading temperature is preferably in the above-mentioned range.

The cylinder set temperature during the melt-kneading is preferably 200 to 300°C, more preferably 200 to 280°C, further preferably 200 to 250°C, most preferably 210 to 240°C. The extrusion rate during the melt-kneading is preferably 30 to 80 kg/Hr, more preferably 30 to 70 kg/Hr, further preferably 40 to 60 kg/Hr. Further, the screw revolution speed during the melt-kneading is preferably 100 to 600 rpm, more preferably 100 to 500 rpm. By appropriately selecting the above-mentioned kneading conditions according to the materials used, the melt-kneading temperature can be controlled to be 200 to 300°C.

When the polyamide resin composition is produced by the above-described method, with respect to fibrous reinforcing filler (B) in the polyamide resin composition, the (median of the fiber length of the fibrous reinforcing filler)/(average of the fiber length of the fibrous reinforcing filler) value can be in the range defined in the present invention.

The (median of the fiber length of the fibrous reinforcing filler)/(average of the fiber length of the fibrous reinforcing filler) is less than 0.90, and, from the viewpoint of further reducing the ratio, the (amount of the fibrous reinforcing filler charged from the top feed): (amount of the fibrous reinforcing filler charged from the side feed) ratio (mass ratio) is preferably 2:98 to 98:2, more preferably 5:95 to 95:5, further preferably 10:90 to 90:10, wherein the amount of the whole of the fibrous reinforcing filler incorporated into the polyamide resin composition is 100 parts by mass.

### [Molded article obtained from the polyamide resin composition and use thereof]

The polyamide resin composition can be advantageously used in producing an injection molded article by injection molding, an extruded article by extrusion, a blow molded article by blow molding, and a rotational molded article by rotational molding. The polyamide resin composition has excellent injection moldability, and therefore can be more advantageously used in an injection molded article by injection molding.

With respect to the method for producing an injection molded article from the polyamide resin composition by injection molding, there is no particular limitation, and a conventionally known method can be used. For example, the method in accordance with ISO294-1 can be employed.

With respect to the method for producing an extruded article from the polyamide resin composition by extrusion, there is no particular limitation, and a conventionally known method can be used.

Further, the polyamide resin composition and a polyolefin, such as polyethylene, or another thermoplastic resin can be subjected to co-extrusion, followed by blow molding, obtaining a multilayer structure. In this instance, a bonding layer can be formed between the polyamide resin composition layer and another thermoplastic resin layer, such as a polyolefin. In the case of a multilayer structure, the polyamide resin composition of the present invention can be used in any of an outer layer and an inner layer.

With respect to the method for producing a blow molded article from the polyamide resin composition by blow molding, there is no particular limitation, and a conventionally known method can be used. Generally, a method may be conducted in which a parison is formed using a general blow molding machine and then subjected to blow molding. With respect to the preferred resin temperature during forming a parison, forming a parison is preferably conducted in the range of temperatures higher than the melting point of the polyamide resin composition by 10 to 70°C.

With respect to the method for producing a rotational molded article from the polyamide resin composition by rotational molding, there is no particular limitation, and a conventionally known method can be used. For example, the method described in WO 2019/054109 can be employed.

With respect to the injection molded article obtained by injection molding, extruded article obtained by extrusion, blow molded article obtained by blow molding, and rotational molded article obtained by rotational molding, there is no particular limitation, but preferred examples of such molded articles include various applications, e.g., automotive parts, such as a spoiler, an air intake duct, an intake manifold, a resonator, a fuel tank, a gas tank, a hydraulic oil tank, a fuel filler tube, a fuel delivery pipe, and other various kinds of hoses, tubes, and tanks, mechanical parts, such as a housing for electric tool, and pipes, electric and electronic parts, such as a tank, a tube, a hose, and a film , etc. household and office products, building material related parts, and furniture parts.

Further, the molded article is advantageously used in parts required to have heat resistance and cold resistance, which parts are used in an environment in which the temperature for environment is largely changed, for example, driving parts, such as a gear and a belt etc., in the field of vehicles, such as an automobile, and sliding parts, such as sidewall of a tire, and a belt etc..

Of these, the molded article is advantageously used in an automotive part, a sliding part, or an electric or electronic part.

Further, the polyamide resin composition has excellent gas barrier properties, and therefore is preferably used in a molded article which is in contact with a high pressure gas, for example, a tank, a tube, a hose, or a film etc., which is in contact with a high pressure gas. With respect to the kind of the gas, there is no particular limitation, and examples include hydrogen, nitrogen, oxygen, helium, methane, butane, and propane etc., and preferred is a gas having low polarity, and especially preferred is hydrogen, nitrogen, or methane.

Further, the polyamide resin composition and a polyolefin, such as polyethylene, or another thermoplastic resin can be subjected to co-extrusion, followed by blow molding, obtaining a multilayer structure. In this instance, a bonding layer can be formed between the polyamide resin composition layer and another thermoplastic resin layer, such as a polyolefin. In the case of a multilayer structure, the polyamide resin composition of the present invention can be used in any of an outer layer and an inner layer.

### Examples

Hereinbelow, the present invention will be described in more detail with reference to the following Examples and Comparative Examples, which should not be construed as limiting the scope of the present invention.

Method for measuring physical properties of Examples, Comparative Examples, and raw materials

### <Relative viscosity>

In accordance with JIS K6920-2, 1 g of a polyamide was dissolved in 100 ml of 96% concentrated sulfuric acid, and a relative viscosity was measured with respect to the resultant solution at 25°C.

### <Terminal amino group concentration>

A polyamide resin was dissolved in a mixed solvent of phenol and methanol, and subjected to neutralization titration to determine a terminal amino group concentration.

### <Number average molecular weight>

Using HLC-802A, manufactured by Tosoh Corp., GPC measurement was conducted under the conditions shown below and a number average molecular weight was determined by PMMA conversion.
Column: Shodex HFIP-LG+HFIP-806M
Eluent: HFIP-10 mM CF3COONa
Temperature: 40°C
Flow rate: 0.8 ml/min
Sample concentration: About 0.1 wt/vol%
Amount of a sample per injection: 500 µl

### <Fiber length of the glass fiber in the polyamide resin composition>

About 10 pellets obtained in the Example or Comparative Example were placed in a glass bottle, and 40 cc of 95% concentrated sulfuric acid was added and the resultant mixture was allowed to stand overnight so that the pellets were dissolved. The sulfuric acid and dissolved polyamide were removed from the resultant solution so that the glass fiber and a small amount of the sulfuric acid remained in the glass bottle. The remaining glass fiber and sulfuric acid were placed on slide glass and covered with cover glass, and a photomicrograph of the glass fiber was taken by means of an optical microscope. With respect to the glass fiber shown in the photomicrograph, except for the glass fiber in the residue, which cannot be clearly seen, and the glass fiber, the whole of which cannot be seen, a fiber length of about 100 glass fibers was measured, and an average and a median of the fiber length were determined.

### [Measurement of physical properties]

Using the pellets in each of Examples 1 to 8 and Comparative Examples 1 to 3, injection molding was conducted in accordance with ISO-527 at a molding temperature of 230°C and at a mold temperature of 40°C to obtain a molded article, and the obtained molded article was used as a test specimen for measurement of mechanical physical properties including a tensile strength, a modulus in tension (tensile modulus), a flexural strength, and a modulus in flexure (flexural modulus), and a warpage.

### <Tensile strength and tensile modulus>

With respect to the test specimen, using a tensilon tensile tester (Shimazu AG-I, manufactured by Shimadzu Corporation), a tensile strength and a tensile modulus were measured in accordance with ISO-527.

A specimen having a tensile strength of exceeding 175 MPa was rated pass, and a specimen having a tensile modulus of exceeding 10,000 MPa was rated pass.

### <Flexural strength and flexural modulus>

With respect to the test specimen, using a tensile tester, model 5567 (manufactured by Instron Corporation), a flexural strength and a flexural modulus were measured at 23°C by the method in accordance with ISO 178.

A specimen having a flexural strength of 275 MPa or more was rated pass, and a specimen having a flexural modulus of exceeding 9,200 MPa was rated pass.

### <Warpage (Dimensional stability)>

A test specimen was allowed to stand under conditions at 23°C and at 50% RH for 24 hours. Then, the resultant test specimen was placed on a surface plate, and one end of the width direction side of the specimen was fixed by a 200 g weight having a width of 30 mm and, at that time, a length of warpage of another end of the width direction side from the surface of surface plate was measured using a steel square, and determined as a warpage. A specimen having a warpage of less than 6.20 mm was rated pass.

### [Examples 1 to 8 and Comparative Example 2]

In a twin-screw extruder at a cylinder temperature of 220°C, a polyamide resin in the amount shown in Table 1 was charged from a raw material feed hopper and melt-kneaded, and then a glass fiber in the amount shown in the glass fiber feeding method in Table 1 was charged from a top feed, and the resultant mixture was melt-kneaded under conditions such that the extrusion volume was 50 kg/Hr, the screw revolution speed was 400 rpm, and the temperature was 260°C, and then further a glass fiber in the amount shown in the glass fiber feeding method in Table 1 was charged from a side feed, and the resultant mixture was melt-kneaded under conditions such that the extrusion rate was 50 kg/Hr, the screw revolution speed was 400 rpm, and the temperature was 260°C, obtaining pellets in Examples 1 to 8 and Comparative Example 2.

### [Comparative Examples 1 and 3]

In a twin-screw extruder at a cylinder temperature of 220°C, a polyamide resin in the amount shown in Table 1 was charged from a raw material feed hopper, and melt-kneaded under conditions such that the extrusion rate was 50 kg/Hr, the screw revolution speed was 400 rpm, and the temperature was 260°C, and then further a glass fiber in the amount shown in Table 1 was charged from a side feed, and the resultant mixture was melt-kneaded under conditions such that the extrusion rate was 50 kg/Hr, the screw revolution speed was 400 rpm, and the temperature was 260°C, obtaining pellets in Comparative Examples 1 and 3.

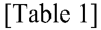

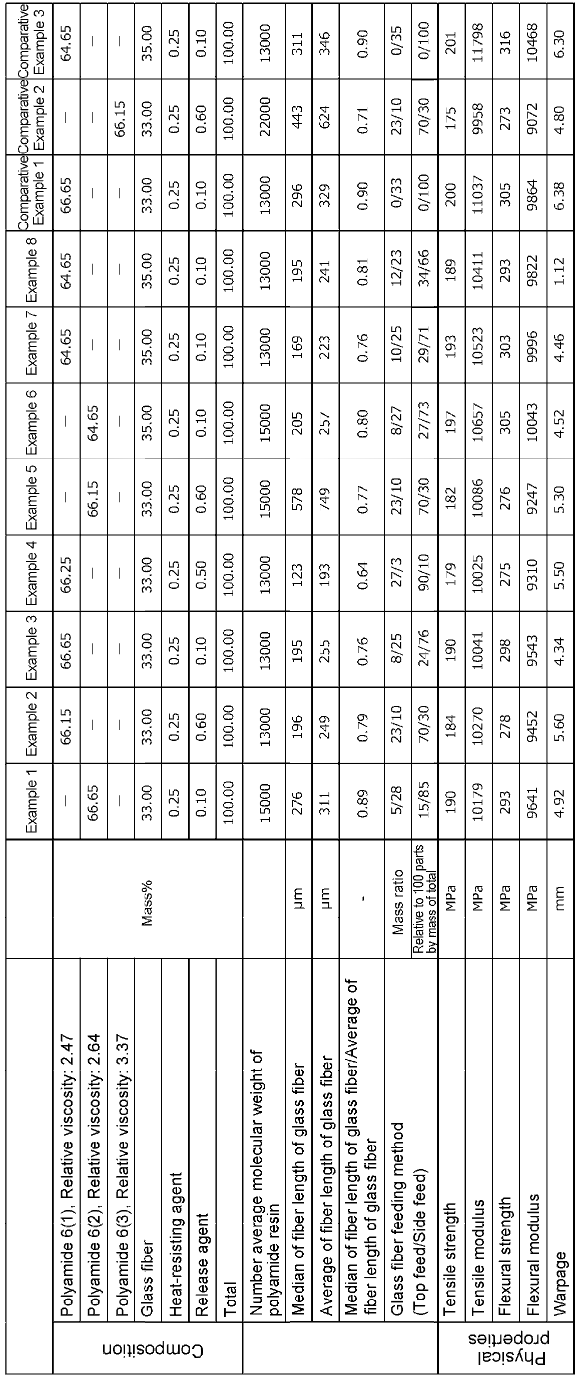

As can be seen from the results shown in Table 1, in Examples 1 to 8 in which the number average molecular weight of the polyamide resin and the (median of the fiber length of the glass fiber)/(average of the fiber length of the glass fiber) ratio are in the respective ranges defined in the present invention, acceptable values for the all mechanical properties have been obtained, and thus high rigidity and high dimensional stability have been achieved.

In Comparative Examples 1 and 3 in which the (median of the fiber length of the glass fiber)/(average of the fiber length of the glass fiber) ratio is not in the range defined in the present invention, the warpage is large such that only poor dimensional stability is obtained.

In Comparative Example 2 in which the number average molecular weight of the polyamide resin is not in the range defined in the present invention, both the average and median of the glass fiber length are high, and acceptable values of the tensile strength, tensile modulus, flexural strength, and flexural modulus cannot be obtained, and thus only poor rigidity is achieved.

The materials used in the Examples are as follows.
PA6 (1): Polyamide 6; relative viscosity: 2.47; number average molecular weight: 13,000; terminal amino group concentration: 45 µmol/g (manufactured by UBE Corporation)
PA6 (2): Polyamide 6; relative viscosity: 2.64; number average molecular weight: 15,000; terminal amino group concentration: 40 µmol/g (manufactured by UBE Corporation)
PA6 (3): Polyamide 6; relative viscosity: 3.37; number average molecular weight: 22,000; terminal amino group concentration: 40 µmol/g (manufactured by UBE Corporation)
Glass fiber: Glass fiber T-249H, manufactured by Nippon Electric Glass Co., Ltd.; single fiber diameter (average fiber diameter): 13 µm; length (fiber length): 3 mm
Heat-resisting agent: CuI/KI, mixture of cuprous iodide and potassium iodide; mass ratio: CuLKI = 1:6
Release agent: Calcium stearate

### INDUSTRIAL APPLICABILITY

The polyamide resin composition of the present invention is advantageously used in molded articles in the fields which require rigidity and dimensional stability as well as sliding properties.

## Claims

1. A polyamide resin composition comprising an aliphatic polyamide resin (A) and a fibrous reinforcing filler (B), wherein the aliphatic polyamide resin (A) has a number average molecular weight of less than 22,000, and wherein the ratio of a median of the fiber length of the fibrous reinforcing filler (B) to an average of the fiber length of the fibrous reinforcing filler (B) is 0.50 to less than 0.90.

2. The polyamide resin composition according to claim 1, wherein the aliphatic polyamide resin (A) has a relative viscosity of 1.90 to less than 3.30, as measured at 25°C in accordance with JIS K-6920-2.

3. The polyamide resin composition according to claim 1, wherein the ratio of a median of the fiber length of the fibrous reinforcing filler (B) to an average of the fiber length of the fibrous reinforcing filler (B) is 0.55 to 0.89.

4. The polyamide resin composition according to claim 1, wherein the aliphatic polyamide resin (A) comprises an aliphatic homopolyamide resin (A-1).

5. The polyamide resin composition according to claim 1, wherein the fibrous reinforcing filler (B) is at least one member selected from the group consisting of a glass fiber, a carbon fiber, a cellulose fiber, and an aramid fiber.

6. The polyamide resin composition according to claim 1, wherein the fibrous reinforcing filler (B) is contained in an amount of 5 to 40% by mass, in 100% by mass of the polyamide resin composition.

7. A method for producing the polyamide resin composition according to any one of claims 1 to 6, the method comprising charging an aliphatic polyamide resin (A) and an optional component from a raw material feed hopper and melt-kneading the resultant mixture, and then charging part of a fibrous reinforcing filler from a top feed and melt-kneading the resultant mixture, and then further charging the remaining fibrous reinforcing filler from a side feed and melt-kneading the resultant mixture.

8. The method for producing the polyamide resin composition according to claim 7, wherein the (amount of the fibrous reinforcing filler charged from the top feed):(amount of the fibrous reinforcing filler charged from the side feed) ratio (mass ratio) is 5:95 to 95:5, wherein the amount of the whole of the fibrous reinforcing filler incorporated into the polyamide resin composition is 100 parts by mass.

9. A molded article which is obtained from the polyamide resin composition according to claims 1 to 6.

10. The molded article according to claim 9, which is an automotive part, a sliding part, or an electric or electronic part.
